# EUROPEAN PATENT APPLICATION

(11) **EP 4 489 344 A1**
(43) Date of publication of application: **08.01.2025**
(21) Application number: 23183125.6
(22) Date of filing: 03.07.2023
(51) Int. Cl.: H04L 9/32, H04L 9/40, H04L 9/00, H04W 12/00, G06Q 20/40

(54) **SECURE REGISTER UNIT, SECURE TRANSACTION UNIT, ELECTRONIC TOKEN TRANSACTION SYSTEM AND METHOD FOR PROVIDING A LOOKUP SERVICE**

(71) Applicant: Giesecke+Devrient advance52 GmbH, 81677 München (DE)
(72) Inventor: BOHN, Markus, 81677 München (DE)
(74) Representative: Ter Meer Steinmeister & Partner

(57) **Abstract**

The invention relates to a secure register unit within an electronic token transaction system, preferably being a lookup service, comprising input means configured to receive a hash value that is based on a user information; storage means configured to store a link between the received hash value and a secure token transaction unit identifier of a secure token transaction unit of the user, wherein the storage means is configured to store a plurality of the links; and output means configured to send the secure token transaction unit identifier upon request from any secure token transaction unit of the electronic token transaction system to the requesting secure token transaction unit. The invention also refers to a secure transaction unit. The invention also relates to an electronic token transaction system in particular an electronic payment transaction system. The invention also relates to a method for providing a lookup service.

## Description

The invention relates to a secure register unit. The invention also refers to a secure transaction unit. The invention also relates to an electronic token transaction system in particular an electronic payment transaction system. The invention also relates to a method for providing a lookup service.

Tokens - also referred to as digital assets, electronic coins, coin data sets - may represent any digital asset, in particular a digital currency, preferably a central bank digital currency, short CBDC. These tokens are issued and deleted by an issuing unit of the token transaction system, such as an issuing authority, or a central bank unit or a commercial bank unit, hereinafter also referred to as secure token issuing unit.

There are different technical approaches for exchanging electronic tokens such as a digital asset e.g., digital currency such as CBDC, issued by a central bank within the electronic tokens transaction system.

According to a first approach, tokens are merely cryptographically secured by the central bank unit and the cryptographically secured tokens are exchanged directly between token transaction units - also referred to as secure wallets and/or secure elements - of the participants in the electronic payment system in an encrypted manner. The exchanged token may also be stored in an encrypted manner. The token transaction units can verify the authenticity of the tokens based on the cryptographic security, such as keys and signatures, and for example checks a certificate from the central bank and/or the other token transaction units for validity within the certificate hierarchy in advance via online access or following the offline protocol of the system.

According to a second approach, tokens are stored in a centralized or decentralized blockchain/distributed ledger of the payment transaction system, e.g., organized by a central bank unit. For a payment transaction, an ownership of a token record changes in the blockchain for which a lot of information (sender/recipient/amount) is required and/or even published. Sender and recipient of the token need an online access to the blockchain at the time of the transaction.

According to a favorable third approach, as for instance described in WO 2020 / 212 331 A1, tokens are stored in token transaction units (also called wallets or payment application units or secure elements) to be directly exchanged between users of an electronic token transaction system. For security-, verification- and registration-purposes, a central token reference register stores token references of all valid tokens without knowing the tokens itself. So, the user can check validity of a received token with dedicated requests send to the token reference register. The token reference register only stores token references of the corresponding token. Tokens can be further modified by each user of the token transaction system, e.g., ownership of tokens can be switched from one user to another user (SWITCH modification), tokens can be split into plural tokens, e.g., for obtaining a token with a reduced monetary value (SPLIT modification) and/or plural tokens can be merged to a single token, e.g., for obtaining a token with a higher monetary value (MERGE modification). Digital signatures are used to further enhance the security.

Electronic token transactions and/or storage of tokens and any associated transaction data and/or storage data in an electronic token transaction system must be safe, secure, and so, means for protecting confidentiality, privacy, integrity, and availability of exchanged and/or stored token data must be implemented. This is especially true for electronic payment transactions and associated payment transactions and payment storages in which a monetary value is linked with each token.

On one side, each of the token transaction units may comprise a unique transaction unit identifier (also referred to as wallet-ID). It may be necessary to know the transaction unit identifier from the other transaction unit within a token transaction in the electronic token transaction system, e.g., during an information or authentication prior the token transaction; and/or for a cryptographically securing the token transactions; and/or for anonymous or pseudonyms protocolling of token transactions; and/or for registering token references.

On the other side, safety, anonymity (or pseudonymity) and confidentiality must be assured at any times to avoid attacks, such as double-spending of tokens and/or spending tokens with fraud-generated (not in real existing) monetary values.

ID directory services (lookup-services) are already known in which links are stored between known user information, such as mail address or telephone number, and an internal system ID, such as bank account. Each third party can retrieve the internal system ID by using the known or public user information to retrieve the system ID.

However, such ID directory services are often targeted by attackers to retrieve personal data and there is a need to secure access to such sensitive user information.

The above-identified objectives are solved with the features of the independent patent claims. Further advantageous embodiments are described in the dependent patent claims.

In an aspect of the present invention there is provided a secure register unit within an electronic token transaction system, preferably being a lookup service.

The secure register unit comprises input means which are configured to receive a hash value. A hash value, also referred to as hash code, hash digest or hash, is the result of a cryptographic hash function or hash algorithm, such as SHA-1, SHA-2, SHA-3, MD5, BLAKE2, BLAKE3, or the like. The hash value is based on a user information, which means that the cryptographic hash function has the user information as an input data on which the hash value results. Advantageously, the hash function is a conventional one-way-function, meaning that based on the user information the same hash value is always generated if the same hash function (e.g. with its parameter setting) is used, but based on the hash value it is hardly or in best case never possible to generate (back) the user information. If only hash values are used (and not the user information) in the secure register unit, the user information cannot be revealed even if the secure register unit is read out.

The user can be a natural person, a legal person, an organization, and/or a machine, e.g. an internet-of-things, IoT, element.

The user information is also referred to as user identification, user number, individual user number and/or costumer reference number. The user information may be one or more of the following: a user's e-mail address; a user's mobile phone number; an international mobile subscriber identity for identifying the user in a mobile network; a user's bank account number; a costumer's reference/ID number; a tax number for identifying the user in a tax office; a passport number for identifying a passport of the user; an ID-card number for identifying an identity card of the user; a pseudonymous identifier (e.g. a user-chosen name or number or data set, e.g. a user name within an internet account or an identification number); a driver's license card number for identifying a driver's license of the user; a national or international digital identification that a citizen (user) may be assigned to in a registration process at an official authority, such as a residents' registration office or a tax office or a vehicle registration authority; a hardware number; and/or a serial number.

The secure register unit further comprises storage means configured to store a link between the received hash value and a secure token transaction unit identifier of a secure token transaction unit of the user. The secure token transaction unit identifier uniquely assigns the transaction unit of the user within the electronic token transaction system. The storage means may be configured to store a plurality of the links. The storage means may be structured in any suitable form, such as to perform lookup-services by using lookup-table structures to store the one or more link; and/or a database-structure.

The secure register unit further comprises output means configured to send the secure token transaction unit identifier upon request from any secure token transaction unit of the electronic token transaction system to the requesting secure token transaction unit.

The request from any secure token transaction unit for sending the secure transaction unit identifier may be the received hash value (received from the input means) that is based on the user information.

With this aspect it is assured that no plaintext user information is stored in the secure register unit. So, in case, the register unit is attacked and read-out, only a hash value of the user but not the user information itself is revealed and so, no disclosure of sensitive user information is possible.

Different user information (e.g. (1) a telephone number and (2) a bank account number) of the same user will lead to different hash values. The secure register unit assures that these different hash values point to the same secure token transaction unit identifier.

In a preferred embodiment, the hash value is based on the user information and additional information. Here, the additional information may serve different purposes and/or may be used to protect the link between user information and secure token transaction unit identifier and/or may help to avoid collisions of hash values in the secure register unit that may occur when different user information lead to an identical hash value which may avoid a unique resolution of the link to receive the correct secure token transaction unit identifier. Alternatively, and/or additionally, the additional information is used to further individualize and/or classify the hash value.

In a preferred embodiment, the additional information is a type indicator. The type indicator is configured to indicate a type of user information on which the hash value is based. So, it is indicated, which type of user information is used and this is used to avoid collisions.

User information of different users may lead to identical hash values. The type indicator would be the appropriate tool to avoid that identical hash values are generated and so, a hash value collision can be avoided.

A first type indicator may indicate user information that is generated by a communication service provider unit. The user information may be a telephone number, an international mobile subscriber number, or an e-mail address of the user. This type indicator may strengthen the user information, because it is generated by a communication system that needs to have unique identifiers. So, uniqueness and validity has a higher level than other types.

A second type indicator may indicate user information that is generated by a financial service provider unit. The user information may be a bank account number or a costumer reference number of the user with the financial service provider unit. This type indicator may be used to differentiate different secure token transaction units used by the same user for different financial service providers (one wallet per user per bank).

A third type indicator may indicate user information that is generated by a governmental service provider unit. The user information may be a tax number, a passport number, a ID-card number, a registration number, or a driver's-license card number of the user. This type indicator may strengthen the user information, because it is generated by a governmental authority and so, its origin, uniqueness and validity may have a higher level than other indicator types.

A fourth type indicator may indicate user information that is generated by a private service provider unit, such as an application store, a media (audio, video, book) service. The user information may be a costumer reference number of the user. Origin, uniqueness and validity of this type indicator may have a lower level than other indicator types.

A fifth type indicator may indicate user information that is generated by a manufacturer unit, e.g. a manufacturer of a secure element or user's equipment. The user information may be a serial number or a hardware number. This type indicator may be used for internet-of-things, IOT, or machine-to-machine, M2M, equipment that may be a user within the secure token transaction system.

A sixth type indicator may indicate user information that is generated by a private company unit or enterprise unit or a social club unit. Such a unit may be a unit of an employer of the user. Here, the user information may be a unique employee identification number. This type indicator may be used for employers to transfer token to the employee (user) without the employers knowledge of the secure token transaction unit identifier. As another example, such a unit may be a unit of a sports club unit of the user. Here, the user information may be a membership identification number. This type indicator may be used for the sports club to transfer token to the club member (user) without the sport clubs knowledge of the secure token transaction unit identifier.

In a preferred embodiment, the additional information is a special tag. This tag is an additional data used to further individualize the hash value within the electronic token transaction system.

The special tag may be a time-tag to indicate a time frame in which the hash value is generated. The time frame may be a year, a quarter of a year, a month, a week or a day in which the hash value is generated. So, a time-frame changing extension would be used to out date user information. This ensures an automatized expiry of the user information and ensures privacy by design as each time frame, such as year, quarter in the year, month, week, day, the user of the secure token transaction system is obliged to actively decide to renew the user information. Shorter time frames, e.g. months, weeks or days may be used for short-term occasions, such as vacation duration, hospital stays, etc.

The special tag may be a secret-tag, also referred to as salt tag, to obfuscate the user information. It may be a random set of data, which is also stored in the secure register unit (only known to the operator of the secure register unit). If some parts of the secure register unit is - disadvantageously - leaked, it will take a much higher amount of computational effort to calculate (relate back to) the user information. By using a secret tag, the attacker can no longer form one of the hash values to find mappings by trial and error.

The special tag may be configured to indicate further service specific data. Since this service specific data is added, in case the register unit is revealed, it would still not be easily possible for an attacker to obtain the user information without having this specific data used within service.

The special tag may be a service-provider-indicator to indicate the service provider. This indicator may be unique within the token transaction system.

The special tag may be a tag known to the user of the secure token transaction unit and configured to be published to the requesting secure token transaction unit for insertion in the request to the secure register unit. Such a tag may be a secret, chosen by the user or provided to the user, such as a personal identification number (PIN). This PIN is provided to the requesting secure token transaction prior requesting the token transaction unit identifier. So, a brute-force attack, in which all user information are used to retrieve the hash value, would fail, because the attacker would also need this special tag (the PIN) to calculate the hash value that is registered in the secure register unit.

In a variant, this special tag is a one-time-identification, such as or comparable with a transaction numbers, TAN, on which basis the link between this hash value (based on user information and the special tag being a one-time-identification) and the secure transaction unit identifier is deleted by the secure register unit as soon as it is successfully requested by the other secure token transaction unit (received at the output means).

In a preferred embodiment, the secure token transaction unit identifier is encrypted prior storing and an encrypted transaction unit identifier is stored in the secure register unit. Thus, the register unit (look up service) will not be able to disclose the secure token transaction unit identifier, even if - for some reason - the operator of the register unit wants to.

In a preferred embodiment, the link as stored comprises the encrypted secure token transaction unit identifier and a trusted service provider unit identifier. The encrypted secure token transaction unit identifier may carry information on the trusted service provider unit for decryption purpose.

The trusted service provider unit may be a financial service provider unit.

The encryption may be performed by the trusted service provider unit or may be performed by the secure register unit upon receipt of an encryption key from the trusted service provider unit. The trusted service provider unit must not necessarily be performing the encryption or may not be informed about the encryption and merely provide a cryptographic key. The encrypted secure token transaction unit identifier then may carry information on the trusted service provider unit for decryption purpose. In any case, the trusted service provider unit may never know the hash value on which the encrypted secure token transaction unit identifier was selected.

Upon request from any secure token transaction unit of the electronic token transaction system, the output means may send the encrypted secure token transaction unit identifier to a/the trusted servicer provider unit corresponding to the trusted service provider unit identifier for decrypting the encrypted secure token transaction unit identifier.

In a preferred embodiment, the storage means comprises at least a first storage means hosted by a first service provider unit configured to store a link between the received hash value and a first part of the secure token transaction unit identifier. The storage means further comprises a second storage means hosted by a second service provider unit configured to store a link between the received hash value and a second part of the secure token transaction unit identifier. So, the register unit is at least partly operated by service provider units, preferably financial service provider units, e.g. the service provider units that issue or manage the secure token transaction unit. The term "at least" in this embodiment indicates that the number of storage means for storing parts of the secure token transaction unit identifier is not limited to two. The number of storage means for storing parts of the secure token transaction unit identifier may be two, three four, five, six, ten or even more than ten. The number of storage means for storing parts of the secure token transaction unit identifier can be arbitrary and can be high.

In a preferred embodiment, the output means comprises a first output means hosted by the first service provider unit, and a second output means hosted by the second service provider unit. So, the register unit is at least partly operated by service provider units, preferably financial service provider units, e.g. the service provider units that issue or manage the secure token transaction unit.

Upon request from any secure token transaction unit to the first output means, the first output means is configured to send the first part of the secure token transaction unit identifier to the requesting secure token transaction unit, wherein the first part comprises address-information about the second part of the secure token transaction unit identifier. So, when intending to identify a user based on known user information, the secure token transaction unit requests it at the first service provider unit to receive a first part of the secure token transaction unit identifier and an address information where the remaining part of the secure token transaction unit identifier can be taken from. So, several different instances needs to be addressed to gather the complete secure token transaction unit identifier.

Upon request from any secure token transaction unit to the second output means, the second output means is configured to send the second part of the secure token transaction unit identifier to the requesting secure token transaction unit, wherein the second part comprises address-information about the first part of the secure token transaction unit identifier. So, when intending to identify a user based on known user information, the secure token transaction unit requests it at the second service provider unit to receive a second part of the secure token transaction unit identifier and an address information where the remaining part of the secure token transaction unit identifier can be taken from. So, several different instances need to be addressed to gather the complete secure token transaction unit identifier.

Here the secure token transaction unit identifier is split (divided) into two parts. However, the number of parts in which the secure token transaction unit identifier is split is not limited here. However, the number of parts should not exceed a certain number, e.g. five, to not reduce user's convenience when trying to receive a secure token transaction unit identifier.

So, the link (mapping) between the hash value and the secure token transaction unit may be further protected by providing a requesting transaction unit (the third party) only with partial information.

In another aspect of the invention there is provided a secure token transaction unit for managing token transactions in an electronic payment transaction system. The secure token transaction unit comprises means for transmitting, to a secure register unit as previously described, a request for receiving a secure token transaction unit identifier of another secure token transaction unit of the electronic token transaction system, the request comprises user information of the other secure token transaction unit, wherein the secure token transaction unit identifier uniquely assigns the other secure token transaction unit to another user within the electronic token transaction system.

Preferably, the secure token transaction unit further comprises control means configured to generate a first level hash value, wherein the first level hash value is based on a user information. So, the user can perform a first level hashing to create the hash value and may include additional information as outlined above. So, the user information is not revealed to the register unit or a hashing unit performing the hashing to receive the hash value for the register unit.

Alternatively, when generating the user information, also the hash value is generated and provided to the user. This ensures the validity of the hashed user information within the register's unit storage means.

Preferably, the secure token transaction unit further comprises means for exchanging one or more tokens with other secure token transaction units in the electronic token transaction system. So, the secure transaction unit is capable of receiving of tokens from and/or transmitting of tokens to another secure transaction unit in the system.

Preferably, the secure token transaction unit further comprises means for transmitting registration requests to a token reference register of the electronic transaction system for registering the tokens in the electronic payment transaction system.

The control means of the secure transaction unit is further configured to generate one or more token references, especially upon modification commands (replacement requests) being processed by the secure transaction unit, the modification commands being preferably one or more of a switch-command, a merge-command and a split-command, wherein the modification commands are only performed for tokens having the same token-type information. For further details related to these modification commands it is referred to WO 2020 / 212 331 A1 and WO 2020 / 212 331 A1. This enables the secure token transaction unit to participate in the favorable third approach as described above.

A secure token transaction unit (as described herein), also referred to as secure wallet, secure token management unit; token wallet; and/or wallet may be used to locally manage token in a secure element itself and/or to modify the tokens and to register the token in the electronic token transaction system. The token may be stored in a token storage that is also managed by the token-wallet.

Alternatively, or additionally, a secure token transaction unit may be a secure account-wallet of the above second or third approach that is also referred to as secure account management unit. Such a secure account-wallet is used to not manage tokens in a secure element itself but in a decentralized ledger, such as a blockchain or a centralized ledger, such as a database that stores the token centrally in the electronic token transaction system. Managing, modifying, and/or registering of the tokens in the electronic transaction system is initiated by the secure account-wallet, however, token transaction or token storage is performed remote of the secure element or the service provider unit.

Each secure token transaction unit comprises one secure token transaction unit identifier, also referred to as wallet-ID or wallet identification data. The secure token transaction unit identifier is assigned to a specific secure token transaction unit for uniquely identifying the secure token transaction unit in the electronic token transaction system. The secure token transaction unit identifier is preferably stored in the specific secure wallet.

The secure token transaction unit identifier may be generated at the unit that issues the secure token transaction unit, such as a financial service provider unit or a central entity in the transaction system. The generation may comprise a coding of data by control means of that issuing unit. In such a case, the service provider unit may code the secure token transaction unit identifier. This coding is performed to assign the secure token transaction unit identifier with the secure token transaction unit that is to be issued. Each token transaction made by this secure token transaction unit and/or each token being managed, such as stored, by this secure token transaction unit can be locally protocolled and in case a suspicious transaction or fraudulent pattern is identified, the protocols may be reviewed.

Alternatively, the secure token transaction unit identifier may be generated by an official authority, a secure token issuing unit, e.g. a central bank unit. In this case, the secure token transaction unit identifier may be received by control means of the secure token transaction unit issuing unit or the secure register unit.

In a preferred embodiment, the secure token transaction unit identifier is a mandatory data to be transmitted between individual users in the electronic transaction system for direct exchange of tokens. This may be a system requirement to ensure high standard security and in such a case, the secure token transaction unit identifier is not only used to uniquely identify the secure token transaction unit, but also possible to identify the "real" user by resolving the user information by using the secure register unit.

In a further embodiment, the secure token transaction unit identifier comprises a plurality of data fields. One or more other data fields of the plurality of data fields may include a version value that expresses the current version of the secure token transaction unit identifier format that is used.

One or more other data fields of the plurality of data fields of the secure token transaction unit identifier may include a token issuing unit identifier that expresses the token issuing unit within the electronic token transaction system. With such a data field it is possible to enable multi-currency token transactions or type-dependent token transactions. A first identifier may be used to identify a first token issuing unit, e.g. a first central bank or a first financial service provider unit, that issues token of a first currency or first type, whereas a second identifier may be used to identify a second token issuing unit, e.g. a second central bank or a second financial service provider unit that issues token of a second currency. To be clearer: One electronic token transaction system may comprise more than one token issuer instances. For instance, a first financial service provider unit, such as a commercial bank A, may issue token-A and a second financial service provider unit, such as a commercial bank B, may issue token-B. Token-A always represents a liability with respect to the first financial service provider unit, even if - for whatever reason - this token A is managed by the second financial service provider unit. Token-B always represents a liability with respect to the second financial service provider unit, even if - for whatever reason - this token B is managed by the first financial service provider unit.

One or more other data fields of the plurality of data fields of the secure token transaction unit identifier may include an identifier of the service provider unit and/or a smart card producer and/or card manufacturer and/or card issuer to identify the service provider unit and/or the smart card producer and/or card manufacturer and/or card issuer or other stakeholder in the token transaction system.

Preferably, the secure token transaction unit identifier further comprises a data element for a type-value configured to identify the type of the digital identification data.

Preferably, the secure token transaction unit identifier further comprises a data element for a count-value configured to identify the number of secure token transaction units issued by the secure service provider unit.

Preferably, the secure token transaction unit identifier is inserted into a subject name data field of a cryptographical certificate used within a token transaction or within a storage of tokens within the electronic token transaction system. Since, certificates may be used to clearly identify the user in a token transaction/storage, no additional data set is required to derive the user in case of suspicious transaction and or suspiciously stored token.

Each combination as named herein may be referred to as a concatenation, which is a logical combination used in information technology.

In an embodiment, the secure token transaction unit is a secure element that is operatively connected to an electronic equipment of a participant in the electronic payment system.

In an embodiment, the secure token transaction unit is a secure wallet that is hosted at a service provider unit.

The control means may be configured to access a token storage, preferably a token storage of the secure transaction unit.

The secure transaction unit may comprise a token storage as a physical entity. The secure token transaction unit may be configured to access the token storage. The token storage may be a token vault of this secure transaction unit. Each secure transaction unit in the transaction system may comprise its own token storage.

From such token storage accessible by the secure token transaction unit, each token can be transferred to any other secure token transaction unit, e.g., owned by a customer of the secure transaction unit.

The secure token transaction unit may be a secure wallet that may be a hardware security module built in hardware or software to enable tamperproof and secure access to the tokens.

In a further aspect there is provided an electronic token transaction system that comprises a plurality of secure token transaction units as described above; one or more secure register units as described above, each being a preferably a lookup service within the electronic token transaction system, wherein each storage means is configured to store a plurality of links between received hash value and a secure token transaction unit identifier of a secure token transaction unit of the user, wherein the secure token transaction unit identifier uniquely assigns the secure token transaction unit of the user within the electronic token transaction system.

Preferably, the electronic token transaction system further comprises a secure token issuing unit having a minting unit configured to generate a new token to be issued in the electronic token transaction system; and a melting unit configured to delete tokens to be deleted from the electronic transaction system; one or more secure token reference register units for registering the tokens of the electronic transaction system.

For a registration of a token in the token reference register, a token reference of the token may be generated. Each token reference comprises a public value, e.g. a public key of an asymmetric cryptographic key pair, wherein the private value of the token is the private key of the asymmetric cryptographic key pair. In this embodiment, the private value and the public value are considered as a token element pair. The token reference may also comprise a monetary value. The token reference may be sent to and stored in the token register upon registration request (also referred to as replacement request). So, a token becomes registered as a valid token in the token transaction system and can be used for further online or offline electronic payment transactions.

The electronic token transaction system may also comprise one or more hashing units configured to generate a hash value based on a user information that is received by a request for receiving a secure token transaction unit identifier from a secure token transaction unit, preferably wherein the hash value is further based on additional information as described above, more preferably, the additional information being a type indicator as described above or a special tag as described above.

The electronic token transaction system may also comprise one or more trusted service provider configured to encrypt the secure token transaction unit identifier prior storing in the storage means of the secure register unit or provide an encryption key to the secure register unit; and/or to receive the encrypted secure token transaction unit identifier from the output means of the secure register unit upon request from any secure token transaction unit and decrypt the encrypted secure token transaction unit identifier.

In a further aspect there is provided a method for providing a lookup service, the method comprising the following steps: Receiving, by means of a secure register unit, a hash value, wherein the hash value is based on a user information; storing, by means of the secure register unit, a links between the received hash value and a secure token transaction unit identifier of a secure token transaction unit of the user, wherein the secure token transaction unit identifier uniquely assigns the secure token transaction unit of the user within the electronic token transaction system, preferably, wherein the storage means is configured to store a plurality of the links; sending, by means of a secure register unit, the secure token transaction unit identifier upon request from any secure token transaction unit of the electronic token transaction system to the requesting secure token transaction unit.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1 shows a secure electronic payment transaction system for token transactions with secure transaction units of the prior art.
Fig. 2 shows an exemplary embodiment of a secure electronic token transaction system having a secure register unit according to the invention.
Fig. 3 shows another exemplary embodiment of a secure electronic token transaction system having a secure register unit according to the invention.
Fig. 4 shows another exemplary embodiment of a secure electronic payment transaction system having a secure register unit according to the invention.
Fig. 5 shows another exemplary embodiment of a secure electronic token transaction system having a secure register unit according to the invention.
Fig. 6 shows another exemplary embodiment of a secure electronic token transaction system having a secure register unit according to the invention.

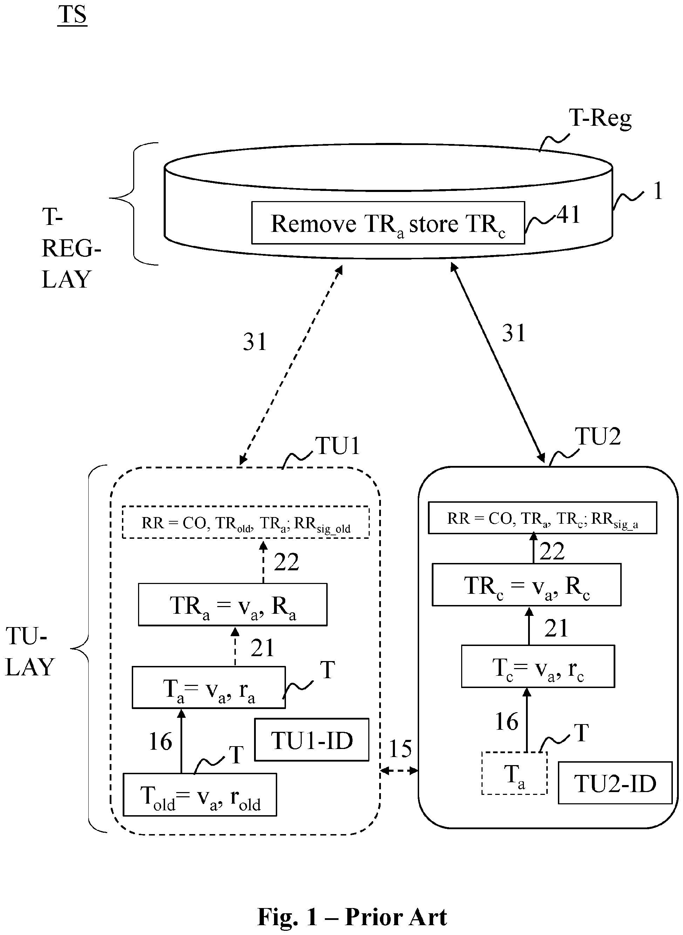

Fig. 1 shows an example of a secure electronic token transaction system TS with secure transaction units TU according to the prior art. The secure electronic token transaction system TS of Fig. 1, e.g. a payment transaction system, corresponds with the third approach as indicated above. The transaction system TS comprises a register layer T-REG-LAY in which a token reference register T-Reg is arranged. The TS further comprises a direct transaction layer TU-LAY in which a plurality of transaction units TU may be provided, as an example, two transaction units TU1 and TU2 are shown in Fig. 1. TU1 and the TU2 have control means configured to generate registration requests RR that comprise modification-commands CO concerning a modification of a token, here Tₐ of the secure transaction unit TU1 and T_{c} of the secure transaction unit TU2.

The transaction units TU of the transaction system TS are arranged to exchange 15 tokens T directly with each other. In the case of Fig. 1, T_{old}, Tₐ and T_{c} are payment tokens, which are also referred to as digital coins, preferably CBDC. Each token T in the TS is generated by a transaction unit TU-I of a specific token issuer (not shown in Fig. 1).

Each token T can be modified, such as split, merged or switched, by applying modification-commands CO by each transaction unit TU.

Each token T can be generated by a transaction unit TUI of a token issuer and can also be deleted. A transaction unit TU-I of a token issuer is, for example, a commercial bank or a financial service provider unit FSP.

Modification-commands are compliant with the above described third approach and it is refrained from repeating these modifications here again. Each modification can be registered in the T-Reg by replacement requests (=registration requests) RR.

A token T is uniquely represented by a monetary value v as well as a random number r. Thus, each token T in this TS has at least two token elements.

The monetary value v as a first mandatory token element can be specified in a range of values from 1 to 2³¹-1. The random number r may be a number in the range of 0 to 2²⁵⁶ - 1, i.e., the order of an elliptic curve, for example secp256r1. For example, the token value v is a 32-bit token element of type integer.

The random number r as a second mandatory token element is a private key of a token-individual key pair. The random number r is unique and secret in the transaction system TS and may not be published or reused. The generation of the random number r must be unpredictable. For example, the random number r is a 32-Byte token element of type integer.

A transaction unit TU has exclusive access to a storage unit (vault) or includes a token memory in a data store of the transaction units TU.

For each token T, a token reference TR can be stored in the token reference register T-Reg. The token reference TR comprises the monetary value v (of the token T) and a public key R that corresponds to the private key r of the token-individual key pair. The token reference TR of the token T can be viewed at any time in the register T-Reg of the transaction system TS.

TU1 is in possession of T_{old} that comprises a monetary value vₐ as well as a random number r_{old}. TU1 switches T_{old} to Tₐ with a switch-modification in step 16. Tₐ comprises the monetary value vₐ (of the T_{old}) as well as a newly generated random number rₐ. In step 21, the TU1 generates a TRₐ that is uniquely assigned to the Tₐ.

This token reference TRₐ can be sent 31 to the token reference register T-Reg in form of a registration request RR by the TU1 (being generated in step 22), if necessary, together with a command CO.

Additionally, the registration request RR is signed with the private key r_{old}. Signing makes it possible to verify that TU1 is in possession/knowledge of the token T_{old}, further enhancing security in the transaction system TS.

The registration request RR generated 22 in TU1 relating to a switch-modification in Fig. 1 includes the modification command CO, the output token references TRₐ of token Tₐ to be registered and the input token reference TR_{old} of the token T_{old} to be removed from the token reference register T-Reg. The registration request RR also comprises a signed registration request RR_{sig_old}, which is the RR that is signed with the private part r_{old} of the token T_{old}.

This RR may be sent to T-Reg in step 31 to register TRₐ in the T-Reg. Every TU in the TS that receives the token Tₐ from TU1 can now verify whether Tₐ is a valid token T in the TS.

The token Tₐ (and maybe also TRₐ and/or the RR e.g. as a proof) may be transmitted 15 from TU1 to TU2, e.g. when performing a token transaction, such as a payment transaction. TU2 now performs a switch-modification to switch the token Tₐ from TU1 to become a token T_{c} of TU2. Therefore, a new random number r_{c} is generated at TU2 in step 16. However, vₐ remains the same token element also in the new T_{c}. A token reference TR_{c} is generated based on T_{c} in step 21 by TU2. Since vₐ is not changed, no money has been generated or deleted.

This token reference TR_{c} can be sent 31 to T-Reg as another registration request RR by the TU2 (being generated in step 22), together with a command CO.

Additionally, the RR is signed with the private key rₐ. Signing makes it possible to verify that TU2 is in possession of the (old) token Tₐ, further enhancing security in the TS.

The registration request RR generated 22 in TU2 relating to the switch-modification includes the switch-modification command CO, one output token reference TR_{c} of a token T_{c} to be registered and one input token reference TRₐ of the token Tₐ to be removed from the token reference register T-Reg. The registration request RRₛ also comprises a signed registration request RR_{sig_a}, which is the RR that is signed with the private part rₐ of the token Tₐ.

Each TU may store the RR as a so-called PROOF in case, no data connection to the T-Reg is available or is not desired, e.g. in an offline token transaction.

RR are sent 31 to the T-Reg. RR is received in the T-Reg. After RR has been checked by the T-Reg, the TRₐ is removed from the T-Reg and TR_{c} is stored in the T-Reg in step 41. The TR_{c} replaces the TRₐ so, the RR can also be referred to as replacement request. With storing the TR_{c}, the token T_{c} is registered in the TS.

Each TR is uniquely assigned to a T in the TS and the TR is used to register T in the TS. The TR is therefore the public representation of T from the direct transaction layer TU-LAY. Sole knowledge or possession of the TR alone does not allow the T to be transferred and is not equivalent to the TU being in possession of the T. The TR is used to prevent multiple spending attempts and checks whether token values v have been generated in an improper manner. Therefore, the TR and, if applicable, the history (the proofs) about the tokens T and the RR from TU(s) are stored in the T-Reg.

T may be stored, for example, in a secure wallet, as the TU. These wallets are, for example, software applications within a terminal device in which the TU is operationally embedded. A wallet may be set up as an application on a smartphone, smartcard, or payment terminal. The wallet is used to securely manage tokens T of the TU, generate token references TR, modify tokens T, and/or exchange tokens T. Wallets are used to communicate with the token reference register T-Reg, generate registration requests RR to the token reference register T-Reg, modify tokens T (switch, merge, split) and/or perform transaction of token T to another TU.

As expressed earlier, a transaction within the TU-Lay does not require a communication link to the T-Reg of the TS. The TS is set up to perform a transaction offline, i.e., without a communication link to the T-Reg. A corresponding registration of token T may therefore be temporally downstream of a transfer of token T to a TU.

The T-Reg is a unit within the transaction system TS and is either a central register or database of the transaction system TS or a decentralized register or database (DLT) of the transaction system TS.

The public part R of the token individual key pair (as part of the TR) is generated by applying a cryptographic function to the private part r of the token individual key pair. This function is difficult to reverse and thus provides the transaction system TS with the required security. It holds that R = r * G, where G can be, for example, a global parameter of the transaction system TS, e.g., a generator point of an elliptic curve, here the secp256r1 curve. Any other suitable cryptographic function to receive the R value can be applied as well.

The subject name of a hardware TU (smart card) and a hosted TU (within a Service Provider Unit (not shown in Fig. 1)) may be the TU-ID. The TU-ID may need to fulfil some or all the following criteria:
The TU-ID may need to convey if it is a wallet certificate, or CA certificate or admin-CA end-entity certificate. The TU-ID may need to be small to be transferred and stored in a hardware wallet, e.g. a smart card. The TU-ID may need to fit into the subject field of a certificate, e.g. a length of 16 bytes should not be exceeded. The TU-ID may need to remain stable across changes to certificates. The TU-ID may need to contain information about an SPU, e.g. a financial service provider unit, FSP, that issued the TU, so that the token transaction processors can use to route data to other token transaction processors, e.g., to find the IP address of the token transaction processor.

The TU-ID should contain an identifier of the central bank (not shown in Fig. 1) to allow cross-currency transfers (=multi-currency transactions or multi-currency transaction systems). The TU-ID may need to contain an identifier within the FSP.

TU1 comprises a secure token transaction unit identifier TU1-ID. TU1-ID uniquely assigns the TU1 of the user within the TS. TU2 comprises a secure token transaction unit identifier TU2-ID. TU2-ID uniquely assigns the TU2 of the user within the TS.

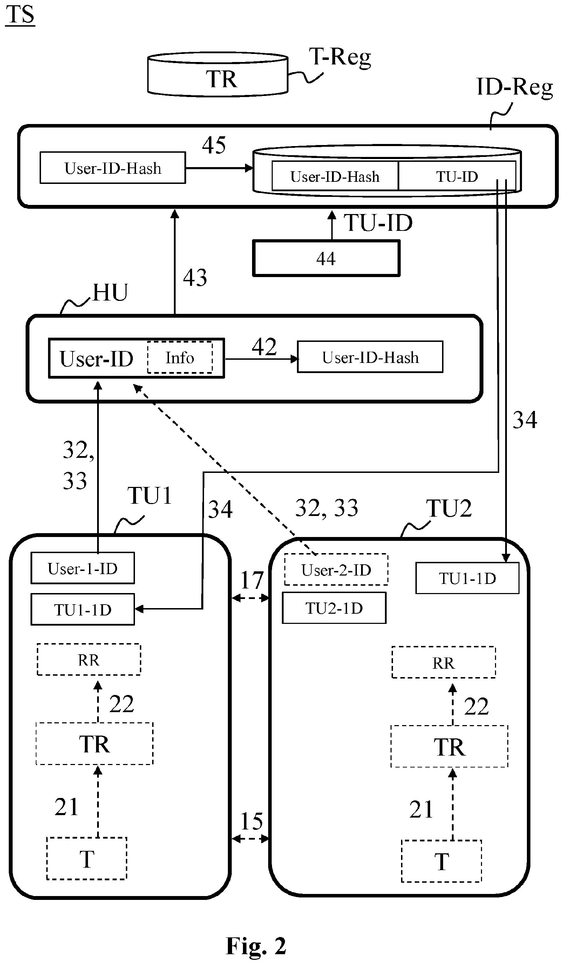

Fig. 2 shows an exemplary embodiment of TS having a secure register unit, ID-REG, according to the invention. All elements shown in Fig. 2 and described with reference to Fig. 2 are identical to corresponding elements of Fig. 1 with same reference signs unless otherwise stated. For these same elements, a further explanation is omitted.

It is the overall goal of the invention to enable a lookup service in form of a secure register unit ID-Reg in which a link between user information and a TU-ID of that user is more secure. For that a TS-central lookup service for TU-ID is part of the TS. In case, user 2 of TU2 sends 33 user information related to user 1 having TU1 (request 33), e.g. a mail address or phone number, user 2 receives 34 the TU1-ID of TU1 for user 1.

According to Fig. 2, TU1 sends 32 a TU-ID generation request to a hashing unit HU in the TS. The request of step 32 includes user information User-1-ID. User information may be one or more of the above stated information or identification, such as e-mail address, mobile number, IBAN, tax number, serial number, and the like. The HU generates a User-ID-Hash in step 42 by applying a hash function on the user information received from the TU1- The User-ID-Hash is provided 43 to an input means of the ID-Reg. The ID-reg also receives 44 a TU-ID. The storage means of the ID-Reg stores 45 the User-ID-Hash and the TU-ID as a link. The ID-Reg is a lookup service, so a plurality of such Hash-TU-ID links is stored.

The TU-ID received in step 44 may already belong to the User-ID-Hash as provided in step 43. Both, TU-ID and User-ID-Hash may be provided by the same HU. However, a TU-ID generator unit may be used as a separate entity that is independent from the HU and so, the relationship of User-ID-Hash and TU-ID is built in the ID-Reg. However, the TU-ID generator unit may be part of the ID-Reg or any other entity of the TS.

The same is applicable for TU2 and user information for user 2.

All hashes within the TS are stored in the same ID-Reg (Lookup table, LUT). Thus, nobody can judge whether the hash originates from a phone number or some other number.

In Fig. 2, the User-ID-Hash is generated 42 by the HU, so the ID-Reg and no TU is in knowledge of the link between User-ID and User-ID-Hash.

Alternatively (not shown in Fig. 1), the User-ID-Hash can be created by the TU itself or by the ID-Reg itself or by a trusted service provider unit TSP.

Not directly show in Fig. 1 but also possible is that plural user information, e.g., an e-mail address and a telephone number, of the same user are stored in the ID-Reg. Each user information will lead to a separate entry in the ID-Reg, however, the same TU-ID will be used twice (once for each User-ID-Hash). The ID-Reg may (but does not need to) internally interlink (points to) the both User-ID-Hash-TU-ID pairs, see LUT table as stored in the ID-Reg below:

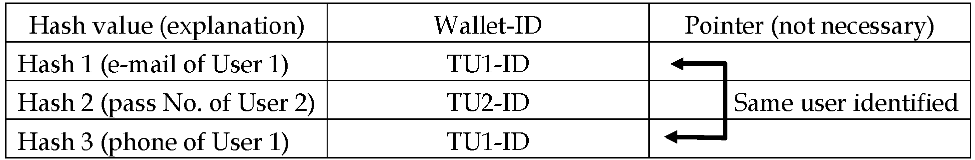

For a token transaction, TU1 may provide User-1-ID to TU2 in step 17.

If user 2 of TU2 has the User-1-ID of user 1 but needs the TU1-ID for reasons provided above, he sends a request 33 to the HU including the user information User-1-ID. In the HU, the User-1-ID is hashed in step 42 and this User-ID-Hash is provided to the ID-Reg. The ID-Reg recognizes the User-ID-Hash and transfers the TU-1-ID of TU1 to the TU2 as a lookup service.

The same is applicable for TU1 that may seek for TU2-ID or its own TU1-ID.

In Fig. 2, the T-Reg is also shown as a register external from the ID-Reg. In a variant of Fig. 2, the ID-Reg functionality (lookup service) is included in the T-Reg architecture. This may reduce effort in terms of authentication or identification in front of different central entities of the TS.

As shown in dashed lines, the HU may add additional information info before generating the User-ID-Hash. This info may be a type identifier that indicates the type of User-ID that is used to reduce the risk of collisions of the hash. Furthermore, or alternatively, a year tag or a salt tag can be used to reduce the risk that revealed data can be used to resolve the hash values to obtain the user information.

The generation 44 of the TU-ID is shown as an external entity of the ID-Reg, e.g. received from a FSP or a central bank. It is possible that the TU-ID is generated 44 by the ID-Reg. It is possible that the TU-ID is generated 44 by the respective TU.

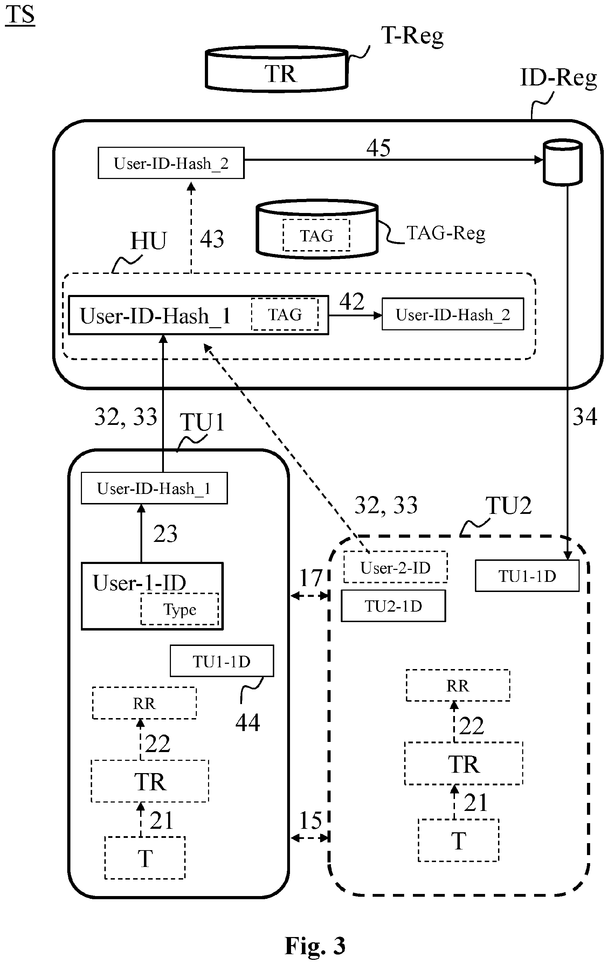

Fig. 3 shows another exemplary embodiment of TS having a secure register unit, ID-REG, according to the invention. All elements shown in Fig. 3 and described with reference to Fig. 3 are identical to corresponding elements of Fig. 1 and 2 if same reference signs are used unless it is otherwise stated. For these same elements, a further explanation is omitted.

As can be seen from Fig. 3, the TU1 is configured to generate a first level hash value User-ID-Hash-1 in step 23. So, the ID-Reg does not obtain knowledge of the plaintext User-ID at all which increases the data privacy. As input value for the respective hash function, the User-1-ID is used and additionally the type-indicator type is used. The obtained User-ID-Hash-1 is provided to the ID-Reg in step 32 when requesting a TU1-ID.

In Fig. 3, a HU is included in the ID-Reg. The HU receives User-ID-Hash-1 from TU1 and adds a tag as additional information.

The tag as added by the HU may be a timeframe tag. Here, a year-tag is used as an example. A yearly changing extension is used to out date old information. This ensures an automatized expiry of the User-ID-Hash-1 (or the User-ID, in case, the TU does not have a hash generator) and ensures privacy by design as each year, the user of the system must actively decide to renew the information. The ID-Reg stores User-ID-Hash-TU-ID pairs in relation with the year tag, see both LUT tables as stored in the ID-Reg below:

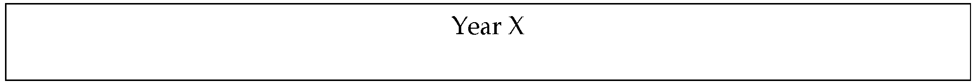

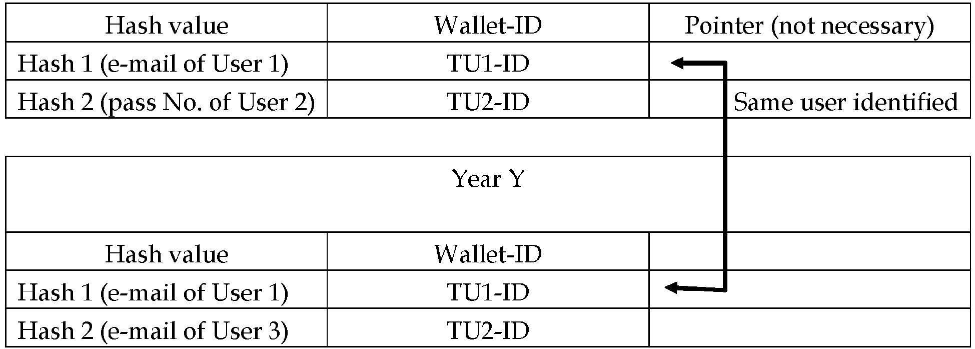

The tag as added by the HU may be a secret (salt) tag. A salt phrase is used to obfuscate the User-ID. It is a random set of data, which is only known to the ID-Reg, e.g. the operator of the database system and stored in the Tag-Register Tag-Reg. If parts of the ID-Reg are leaked, it gets much harder to calculate User-ID.

As can be seen from TU2, the hash generator in the TU is mandatory and TUs can participate in the TS with or without such hash generators.

Instead of a year-tag as timeframe tag, also a quarter-of-a-year-tag or a week tag or a month tag may be used, e.g. in case of short-term-token transaction systems, such as systems used in vacation, hospital-stay etc.

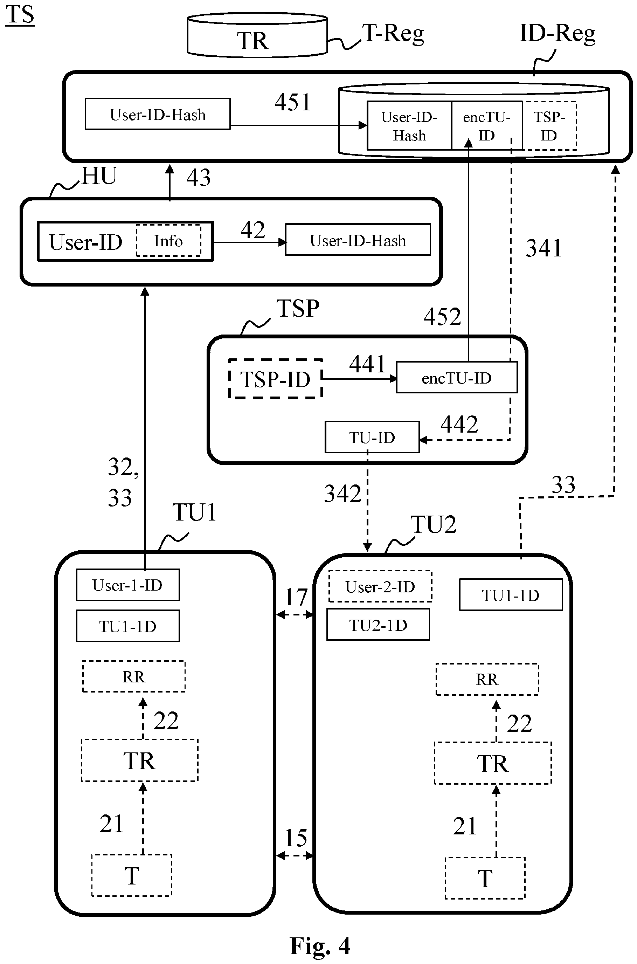

Fig. 4 shows another exemplary embodiment of TS having a secure register unit, ID-REG, according to the invention. All elements shown in Fig. 4 and described with reference to Fig. 4 are identical to corresponding elements of Fig. 1 and 2 and 3 if same reference signs are used unless it is otherwise stated. For these same elements, a further explanation is omitted.

When requesting a TU-ID in step 32, the generation of hash values from User-ID and/or additional information Info, tag, type is the same as stated in the Figs. 2 and 3 and it is kindly referred thereto. The User-ID-Hash is stored in the ID-reg in step 451.

The generation 44 of the TU-ID is different in Fig. 4. Here, a trusted service provider unit TSP is used to encrypt the TU-ID in step 441 to obtain an encTU-ID. The encryption 441 can be made inside the ID-Reg in case the TSP only provides the appropriate key, e.g., a public key of a key pair, to the ID-Reg. The encTU-ID is stored in the ID-Reg in step 452. Preferably an identifier TSP-ID of the TSP is added in the LUT-entry.

In the embodiment of Fig. 4, the TU-ID is encrypted in step 441 with a key from TSP, before being put into the LUT of ID-Reg. The TSP must not necessarily be informed about the encryption if they provide a public key. The encTU-ID will carry information on the TSP as TSP-ID.

When a request is initiated to retrieve the TU-ID in step 33 based on User-1-ID by the TU2, the encTU-ID is sent in step 341 to the TSP using the TSP-ID (e.g., an address information based thereon). The encTU-ID is decrypted in the TSP in step 442. The decrypted TU-ID is sent from the TSP to the TU2 in step 342. In this scenario, the TSP has the plain text TU-ID for the first time.

According to Fig. 4, the ID-Reg will not have possibility to disclose TU-IDs even if wanted to. The TSP will never know User-ID-Hash or User-ID-Hash-1 on which the encTU-ID was selected.

The TU-ID may be extended by a random set of information to avoid identical encTU-ID.

With Fig. 4, an FSP encrypted output is possible.

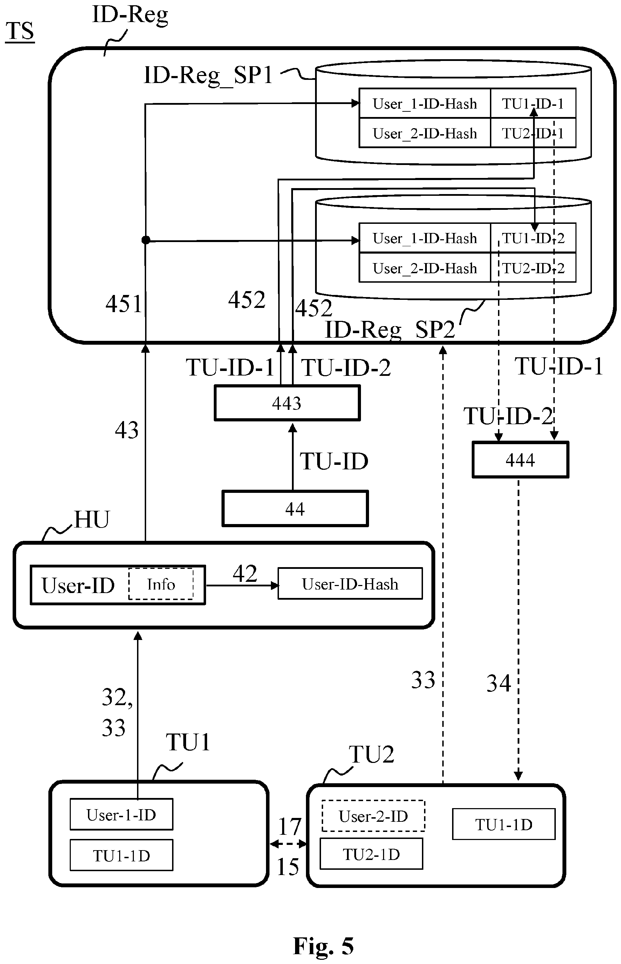

Fig. 5 shows another exemplary embodiment of TS having a secure register unit, ID-REG, according to the invention. All elements shown in Fig. 5 and described with reference to Fig. 5 are identical to corresponding elements of Fig. 1 and 2 and 3 and 4 if same reference signs are used unless it is otherwise stated. For these same elements, a further explanation is omitted.

Here, different parts of the ID-Reg are hosted by different FSPs and each of them store only a fraction of the TU-ID.

The generating 44 of the TU-ID is different in Fig. 5. Before the TU-ID is stored in the ID-Reg, it is split (divided) into a reasonable number of parts TU-ID-1 and TU-ID-2. Each part is stored 452 in a different ID-Reg, namely TU-ID-1 is stored 452 in ID-Reg_SP1 and TU-ID-2 is stored 452 in ID-Reg_SP2, thus it is sent to different look up services, respective entered into different tables.

When requesting a TU-ID in step 32, the generation of hash values from User-ID and/or additional information Info, tag, type is nearly the same as stated in the Figs. 2, 3 and 4 and it is kindly referred thereto. However, the User-ID-Hash is stored in each of the ID-Reg_SP1 and ID-Reg_SP2 in step 451.

Upon request 33 from TU2 to retrieve the TU1-ID from TU1 at one of the ID-Reg_SP1 and ID-Reg_SP2, each part TU1-ID-1 and TU1-ID-2 of the TU1-ID is organized by the FSP who receives the request 33 first. Each part TU1-ID-1 and TU1-ID-2 may have address information to indicate the location of the respective other part. The number of parts should not exceed 5 to avoid increased effort. The TU1-ID-1 and TU1-ID-2 are received and merged 444 in one of the FSP, preferably the one which received the request 33. Upon merging 444, the TU1-ID is received at the TU2.

In case on leaks the data of one of the SPs, only incomplete LUT or incomplete TU-IDs are retrieved from this one leaked source. When intending to identify a person based on the User-ID, either the requesting TU has to connect to several different FSPs to gather the complete information or the first FSP that receives the request 33 organizes the other parts.

Instead of merely splitting the TU-ID, a mathematical operation, such as a summation and/or a modulo highest possible value, can be applied to make it even harder to guess the missing part TU-ID-x of the TU-ID.

With Fig. 5, a partial TU-ID output is possible or only the FSP-info may be output, such as that FSP1 is provided instead of TU1-ID-1, if FSP1 resolves the User-ID to the TU1-ID.

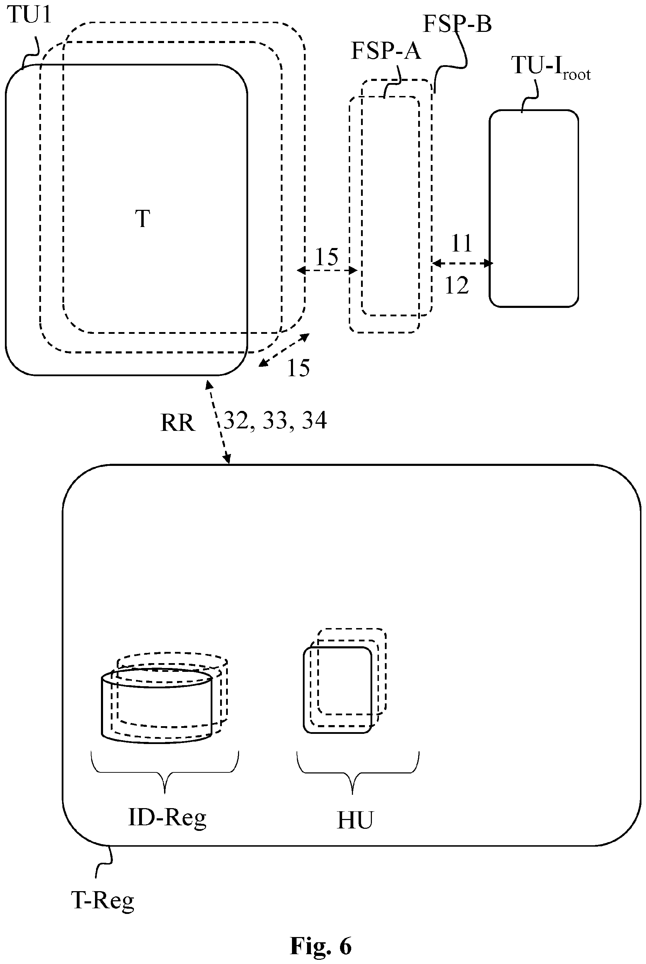

Fig. 6 shows another exemplary embodiment of a secure electronic token transaction system having a secure register unit ID-Reg according to the invention. Here, the ID-Reg is included into the T-Reg for reducing the number of central instances (entities) within the TS.

In Fig. 6 it is indicated that a plurality of FSP, here FSP-A, FSP-B, exists that may all receive root tokens from a root token issuer TU-Iᵣₒₒₜ, e.g. a central bank. Tokens T may be newly issued or deleted.

These new tokens T may be issued to the FSPs, also referred to as intermediate token issuers, such as commercial banks FSP-A, FSP-B. Here, token-type information may or may not be added to the Token T and these tokens T may be used in direct token exchange 15.

In Fig. 6 it is shown that a plurality of ID-Regs hosted by the FSPs, but residing in the T-Reg may be provided in the token reference register T-Reg to accelerate the lookup service or to use the ID-Regs as explained in Fig. 5. Here, it is further indicated that a plurality of HU may be provided in the token reference register T-Reg.

### REFERENCE SIGNS

- TS: Electronic (payment) transaction system
- TU: Transaction unit in TS, wallet
- HU: Hashing Unit
- ID-Reg: TU-ID-Register
- ID-Reg_SPx: TU-ID-Register of service provider unit x
- User-ID: User Information, User Identification, individual number
- User-ID-Hash: Hash of User-ID
User-ID-Hash_1 First Level Hash of User-ID
User-ID-Hash_2 Second Level Hash of User-ID
- TU-ID: Identification of TU, Wallet-ID
TU-ID_1 First part of identification of TU, Wallet-ID-Part_1
TU-ID_2 Second part of identification of TU, Wallet-ID-Part_2
encTU-ID Encrypted TU-ID
- Info: Additional Information
TYPE Type indicator
TAG Special tag, year-tag, secret-tag
- TSP: Trusted Service Provider unit
- TSP-ID: TSP-Identifier
- FSP: Financial service provider unit
- TU-Iᵣₒₒₜ: Root token Issuer unit
- T-Reg: Token reference register
1 Storage unit
2 Verifying unit
3 Evaluating v-sum unit
4 New-registration unit
- T-Reg-LAY: Token registration layer
- TU-LAY: Token transfer layer
- RR: Registration request, replacement request
- T: Token
- TR: Token reference
- v: Monetary value of T
- r: Secret, private key of token-individual key pair
- R: public key of token-individual key pair
- CO: Command
- sig: Signature
- 15: transfer of token
- 16: Modify token
- 17: Receive User-ID
- 21: Generate token reference
- 22: Generate RR
- 23: Generate User-ID-HASH_1
- 31: registration request
- 32: TU-ID generation request
- 33: Request TU-ID based on User-ID
- 34: Transfer TU-ID based on User-ID
341 Transfer encrypted TU-ID
342 Transfer decrypted TU-ID
- 41: Replace TR by remove TR and store TR
- 42: Generate User-ID-HASH
- 43: Transfer User-ID-HASH
- 44: Generate TU-ID
441 Encrypt TU-ID
442 Decrypt TU-ID
443 Split TU-ID
444 Merge TU-ID
45 Store User-ID-HASH and TU-ID
451 Store User-ID-HASH
452 Store encTU-ID

## Claims

1. A secure register unit (ID-Reg) within an electronic token transaction system (TS), preferably being a lookup service, comprising:
• input means configured to receive (43) a hash value (User-ID-Hash), wherein the hash value (User-ID-Hash) is based on a user information (User-Info);
• storage means configured to store a link between the received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS), preferably, wherein the storage means is configured to store a plurality of the links;
• output means configured to send the secure token transaction unit identifier (TU-ID) upon request from any secure token transaction unit (TU) of the electronic token transaction system (TS) to the requesting secure token transaction unit (TU).

2. The secure register unit (ID-Reg) of claim 1, wherein the hash value (User-ID-Hash) is based on the user information (User-ID) and additional information (info).

3. The secure register unit (ID-Reg) of claim 2, wherein the additional information (Info) is a type indicator (type), wherein the type indicator (type) is configured to indicate a type of user information (User-ID) on which the hash value (User-ID-Hash) is based on, wherein preferably:
• a first type indicator is configured to indicate user information (User-ID) that is generated by a communication service provider unit, wherein the user information (User-ID) being more preferably a telephone number or an e-mail address of the user; and/or
• a second type indicator is configured to indicate user information (User-ID) that is generated by a financial service provider unit, the user information (User-ID) being more preferably a bank account number or a costumer reference number of the user; and/or
• a third type indicator is configured to indicate user information (User-ID) that is generated by a governmental service provider unit, the user information (User-ID) being more preferably a tax number, a passport number, a ID-card number, a registration number, or a driver's-license card number of the user;
• a fourth type indicator is configured to indicate user information (User-ID) that is generated by a private service provider unit, the user information (User-ID) being a costumer reference number of the user;
• a fifth type indicator is configured to indicate user information (User-ID) that is generated by a manufacturer unit, the user information (User-ID) being a serial number or a hardware number; and/or
• a sixth type indicator is configured to indicate user information (User-ID) that is generated by a private company unit or enterprise unit or a social club unit.

4. The secure register unit (ID-Reg) of claim 2 or 3, wherein the additional information (info) is a special tag (tag), wherein the special tag (tag) is configured to further individualize the hash value (User-ID-Hash) within the electronic token transaction system (TS), wherein preferably:
• the special tag (tag) is a time-tag configured to indicate a time frame in which the hash value is generated; and/or
• the special tag is a secret-tag configured to obfuscate the user information (User-ID);
• the special tag is a tag configured to indicate further service specific data;
• the special tag is a service-provider-indicator configured to indicate the service provider; and/or
• the special tag is a tag known to the user of the secure token transaction unit (TU) and configured to be published to the requesting secure token transaction unit (TU) for insertion in the request to the secure register unit (ID-Reg), wherein more preferably, the special tag being a one-time-passwords, wherein the link between this hash value and the secure transaction unit identifier is deleted by the secure register unit (ID-Reg) immediately after being successfully requested by the other secure token transaction unit.

5. The secure register unit (ID-Reg) of any of the preceding claims, wherein the secure token transaction unit identifier (TU-ID) is encrypted prior storing and an encrypted transaction unit identifier (TU-ID) is stored in the secure register unit (ID-Reg).

6. The secure register unit (ID-Reg) of claim 5, wherein the link as stored comprises the encrypted secure token transaction unit identifier (TU-ID) and a trusted service provider unit identifier (TSP-ID).

7. The secure register unit (ID-Reg) of any of the preceding claims 5 and 6, wherein the encryption is performed by a trusted service provider unit (TSP) or the encryption is performed by the secure register unit (ID-Reg) upon receipt of an encryption key from the trusted service provider unit (TSP).

8. The secure register unit (ID-Reg) of any of the preceding claims 5 to 7, wherein upon request from any secure token transaction unit (TU) of the electronic token transaction system (TS) the output means is configured to send the encrypted secure token transaction unit identifier (encTU-ID) to a trusted servicer provider unit (TSP) corresponding to the trusted service provider unit identifier (TSP-ID) for decrypting the encrypted secure token transaction unit identifier (encTU-ID).

9. The secure register unit (ID-Reg) of any of the preceding claims, wherein the storage means comprises at least:
• a first storage means hosted by a first service provider unit configured to store a link between the received hash value (User-ID-Hash) and a first part (TU-ID-1) of the secure token transaction unit identifier (TU-ID), and
• a second storage means hosted by a second service provider unit configured to store a link between the received hash value (User-ID-Hash) and a second part (TU-ID-2) of the secure token transaction unit identifier (TU-ID).

10. The secure register unit (ID-Reg) of claim 9, wherein the output means comprises:
• a first output means hosted by the first service provider unit, and
• a second output means hosted by the second service provider unit, and
• wherein upon request from any secure token transaction unit (TU) to the first output means, the first output means is configured to send the first part (TU-ID-1) of the secure token transaction unit identifier (TU-ID) to the requesting secure token transaction unit (TU), wherein the first part (TU-ID-1) comprises address-information about the second part (TU-ID-2) of the secure token transaction unit identifier (TU-ID); or
• wherein upon request from any secure token transaction unit (TU) to the second output means, the second output means is configured to send the second part (TU-ID-2) of the secure token transaction unit identifier (TU-ID) to the requesting secure token transaction unit (TU), wherein the second part (TU-ID-2) comprises address-information about the first part (TU-ID-1) of the secure token transaction unit identifier (TU-ID).

11. A secure token transaction unit (TU) for managing token transactions in an electronic payment transaction system (TS), the secure token transaction unit (TU) comprising:
• means for transmitting (33), to a secure register unit (ID-Reg) according to one of the preceding claims, a request for receiving (34) a secure token transaction unit identifier (TU-ID) of another secure token transaction unit (TU) of the electronic token transaction system (TS), the request comprises user information (User-ID) of the other secure token transaction unit (TU), wherein the secure token transaction unit identifier (TU-ID) uniquely assigns the other secure token transaction unit (TU) to another user within the electronic token transaction system (TS),
• preferably further comprising:
o control means configured to generate (23) a first level hash value (User-ID-Hash_1), wherein the first level hash value (User-ID-Hash_1) is based on a user information (User-ID);
o means for exchanging one or more tokens (T) with other secure token transaction units (TU) in the electronic token transaction system (TS); and
o means for transmitting registration requests (RR) to a token reference register (T-Reg) of the electronic transaction system (TS) for registering the tokens (T) in the electronic payment transaction system (TS).

12. An electronic token transaction system (TS) comprising:
• a plurality of secure token transaction units (TU) according to claim 11;
• one or more secure register units (ID-Reg) according to one of the preceding claims 1 to 10, each being a lookup service within the electronic token transaction system (TS), wherein each storage means is configured to store a plurality of links between received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS);
• preferably further comprising:
o a secure token issuing unit (CB) comprising:
▪ a minting unit configured to generate a new token to be issued in the electronic token transaction system (TS); and
▪ a melting unit configured to delete tokens to be deleted from the electronic transaction system (TS);
o one or more secure token reference register units (T-Reg) for registering the tokens (T) of the electronic transaction system (TS).

13. The electronic token transaction system (TS) of claim 12, further comprising one or more hashing units (HU) configured to generate (23) a hash value (User-ID-Hash) based on a user information (User-ID) that is received by a request for receiving (34) a secure token transaction unit identifier (TU-ID) from a secure token transaction unit (TU), preferably wherein the hash value (User-ID-Hash) is further based on additional information (info), more preferably, the additional information (Info) is a type indicator or a special tag (tag).

14. The electronic token transaction system (TS) of claim 12 or 13, further comprising one or more trusted service provider (TSP) configured to:
• encrypt the secure token transaction unit identifier (TU-ID) prior storing in the storage means of the secure register unit (ID-Reg) or provide an encryption key to the secure register unit (ID-Reg); and/or
• receive the encrypted secure token transaction unit identifier (encTU-ID) from the output means of the secure register unit (ID-Reg) upon request from any secure token transaction unit (TU) and decrypt the encrypted secure token transaction unit identifier (encTU-ID).

15. A method for providing a lookup service, the method comprising the following steps:
• receiving (43), by means of a secure register unit (ID-Reg), a hash value (User-ID-Hash), wherein the hash value (User-ID-Hash) is based on a user information (User-ID);
• storing, by means of the secure register unit (ID-Reg), a links between the received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS), preferably, wherein the storage means is configured to store a plurality of the links;
• sending, by means of a secure register unit (ID-Reg), the secure token transaction unit identifier (TU-ID) upon request from any secure token transaction unit (TU) of the electronic token transaction system (TS) to the requesting secure token transaction unit (TU).

## Amended claims

### Amended claims in accordance with Rule 137(2) EPC.

1. A secure register unit (ID-Reg) within an electronic token transaction system (TS) being a lookup service, comprising:
• input means configured to receive (43) a hash value (User-ID-Hash), wherein the hash value (User-ID-Hash) is based on a user information (User-Info);
• storage means configured to store a link between the received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS), wherein the storage means is configured to store a plurality of the links;
• output means configured to send the secure token transaction unit identifier (TU-ID) upon request from any secure token transaction unit (TU) of the electronic token transaction system (TS) to the requesting secure token transaction unit (TU).

2. The secure register unit (ID-Reg) of claim 1, wherein the hash value (User-ID-Hash) is based on the user information (User-ID) and additional information (info).

3. The secure register unit (ID-Reg) of claim 2, wherein the additional information (Info) is a type indicator (type), wherein the type indicator (type) is configured to indicate a type of user information (User-ID) on which the hash value (User-ID-Hash) is based on, wherein preferably:
• a first type indicator is configured to indicate user information (User-ID) that is generated by a communication service provider unit, wherein the user information (User-ID) being more preferably a telephone number or an e-mail address of the user; and/or
• a second type indicator is configured to indicate user information (User-ID) that is generated by a financial service provider unit, the user information (User-ID) being more preferably a bank account number or a costumer reference number of the user; and/or
• a third type indicator is configured to indicate user information (User-ID) that is generated by a governmental service provider unit, the user information (User-ID) being more preferably a tax number, a passport number, a ID-card number, a registration number, or a driver's-license card number of the user;
• a fourth type indicator is configured to indicate user information (User-ID) that is generated by a private service provider unit, the user information (User-ID) being a costumer reference number of the user;
• a fifth type indicator is configured to indicate user information (User-ID) that is generated by a manufacturer unit, the user information (User-ID) being a serial number or a hardware number; and/or
• a sixth type indicator is configured to indicate user information (User-ID) that is generated by a private company unit or enterprise unit or a social club unit.

4. The secure register unit (ID-Reg) of claim 2 or 3, wherein the additional information (info) is a special tag (tag), wherein the special tag (tag) is configured to further individualize the hash value (User-ID-Hash) within the electronic token transaction system (TS), wherein preferably:
• the special tag (tag) is a time-tag configured to indicate a time frame in which the hash value is generated; and/or
• the special tag is a secret-tag configured to obfuscate the user information (User-ID);
• the special tag is a tag configured to indicate further service specific data;
• the special tag is a service-provider-indicator configured to indicate the service provider; and/or
• the special tag is a tag known to the user of the secure token transaction unit (TU) and configured to be published to the requesting secure token transaction unit (TU) for insertion in the request to the secure register unit (ID-Reg), wherein more preferably, the special tag being a one-time-passwords, wherein the link between this hash value and the secure transaction unit identifier is deleted by the secure register unit (ID-Reg) immediately after being successfully requested by the other secure token transaction unit.

5. The secure register unit (ID-Reg) of any of the preceding claims, wherein the secure token transaction unit identifier (TU-ID) is encrypted prior storing and an encrypted transaction unit identifier (TU-ID) is stored in the secure register unit (ID-Reg).

6. The secure register unit (ID-Reg) of claim 5, wherein the link as stored comprises the encrypted secure token transaction unit identifier (TU-ID) and a trusted service provider unit identifier (TSP-ID).

7. The secure register unit (ID-Reg) of any of the preceding claims 5 and 6, wherein the encryption is performed by a trusted service provider unit (TSP) or the encryption is performed by the secure register unit (ID-Reg) upon receipt of an encryption key from the trusted service provider unit (TSP).

8. The secure register unit (ID-Reg) of any of the preceding claims 5 to 7, wherein upon request from any secure token transaction unit (TU) of the electronic token transaction system (TS) the output means is configured to send the encrypted secure token transaction unit identifier (encTU-ID) to a trusted servicer provider unit (TSP) corresponding to the trusted service provider unit identifier (TSP-ID) for decrypting the encrypted secure token transaction unit identifier (encTU-ID).

9. The secure register unit (ID-Reg) of any of the preceding claims, wherein the storage means comprises at least:
• a first storage means hosted by a first service provider unit configured to store a link between the received hash value (User-ID-Hash) and a first part (TU-ID-1) of the secure token transaction unit identifier (TU-ID), and
• a second storage means hosted by a second service provider unit configured to store a link between the received hash value (User-ID-Hash) and a second part (TU-ID-2) of the secure token transaction unit identifier (TU-ID).

10. The secure register unit (ID-Reg) of claim 9, wherein the output means comprises:
• a first output means hosted by the first service provider unit, and
• a second output means hosted by the second service provider unit, and
• wherein upon request from any secure token transaction unit (TU) to the first output means, the first output means is configured to send the first part (TU-ID-1) of the secure token transaction unit identifier (TU-ID) to the requesting secure token transaction unit (TU), wherein the first part (TU-ID-1) comprises address-information about the second part (TU-ID-2) of the secure token transaction unit identifier (TU-ID); or
• wherein upon request from any secure token transaction unit (TU) to the second output means, the second output means is configured to send the second part (TU-ID-2) of the secure token transaction unit identifier (TU-ID) to the requesting secure token transaction unit (TU), wherein the second part (TU-ID-2) comprises address-information about the first part (TU-ID-1) of the secure token transaction unit identifier (TU-ID).

11. A secure token transaction unit (TU) for managing token transactions in an electronic payment transaction system (TS), the secure token transaction unit (TU) comprising:
• means for transmitting (33), to a secure register unit (ID-Reg) according to one of the preceding claims, a request for receiving (34) a secure token transaction unit identifier (TU-ID) of another secure token transaction unit (TU) of the electronic token transaction system (TS), the request comprises user information (User-ID) of the other secure token transaction unit (TU), wherein the secure token transaction unit identifier (TU-ID) uniquely assigns the other secure token transaction unit (TU) to another user within the electronic token transaction system (TS),
• preferably further comprising:
∘ control means configured to generate (23) a first level hash value (User-ID-Hash_1), wherein the first level hash value (User-ID-Hash_1) is based on a user information (User-ID);
∘ means for exchanging one or more tokens (T) with other secure token transaction units (TU) in the electronic token transaction system (TS); and
∘ means for transmitting registration requests (RR) to a token reference register (T-Reg) of the electronic transaction system (TS) for registering the tokens (T) in the electronic payment transaction system (TS).

12. An electronic token transaction system (TS) comprising:
• a plurality of secure token transaction units (TU) according to claim 11;
• one or more secure register units (ID-Reg) according to one of the preceding claims 1 to 10, each being a lookup service within the electronic token transaction system (TS), wherein each storage means is configured to store a plurality of links between received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS);
• preferably further comprising:
∘ a secure token issuing unit (CB) comprising:
▪ a minting unit configured to generate a new token to be issued in the electronic token transaction system (TS); and
▪ a melting unit configured to delete tokens to be deleted from the electronic transaction system (TS);
∘ one or more secure token reference register units (T-Reg) for registering the tokens (T) of the electronic transaction system (TS).

13. The electronic token transaction system (TS) of claim 12, further comprising one or more hashing units (HU) configured to generate (23) a hash value (User-ID-Hash) based on a user information (User-ID) that is received by a request for receiving (34) a secure token transaction unit identifier (TU-ID) from a secure token transaction unit (TU), preferably wherein the hash value (User-ID-Hash) is further based on additional information (info), more preferably, the additional information (Info) is a type indicator or a special tag (tag).

14. The electronic token transaction system (TS) of claim 12 or 13, further comprising one or more trusted service provider (TSP) configured to:
• encrypt the secure token transaction unit identifier (TU-ID) prior storing in the storage means of the secure register unit (ID-Reg) or provide an encryption key to the secure register unit (ID-Reg); and/or
• receive the encrypted secure token transaction unit identifier (encTU-ID) from the output means of the secure register unit (ID-Reg) upon request from any secure token transaction unit (TU) and decrypt the encrypted secure token transaction unit identifier (encTU-ID).

15. A method for providing a lookup service, the method comprising the following steps:
• receiving (43), by means of a secure register unit (ID-Reg), a hash value (User-ID-Hash), wherein the hash value (User-ID-Hash) is based on a user information (User-ID);
• storing, by means of the secure register unit (ID-Reg), a link between the received hash value (User-ID-Hash) and a secure token transaction unit identifier (TU-ID) of a secure token transaction unit (TU) of the user, wherein the secure token transaction unit identifier (TU-ID) uniquely assigns the secure token transaction unit (TU) of the user within the electronic token transaction system (TS), wherein the storage means is configured to store a plurality of the links;
sending, by means of a secure register unit (ID-Reg), the secure token transaction unit identifier (TU-ID) upon request from any secure token transaction unit (TU) of the electronic token transaction system (TS) to the requesting secure token transaction unit (TU).
